# FASCICULE DE BREVET EUROPEEN

(11) **EP 4 457 098 B1**
(45) Date de publication et mention de la délivrance du brevet: **29.10.2025**
(21) Numéro de dépôt: 22786016.0
(22) Date de dépôt: 16.09.2022
(51) Int. Cl.: B41F 13/26, B41F 13/36, B41F 31/30, B05C 1/08, B41J 11/20

(54) **DISPOSITIF AUTOMATISE DE BLOCAGE ET DEBLOCAGE DE PALIERS**
AUTOMATISIERTE VORRICHTUNG ZUM VERRIEGELN UND ENTRIEGELN VON LAGERN
AUTOMATED DEVICE FOR LOCKING AND UNLOCKING BEARINGS

(30) Priorité: 30.12.2021 CN 202123392611 U; 30.12.2021 CN 202111642672
(43) Date de publication de la demande: 06.11.2024
(73) Titulaire: JOHN COCKERILL S.A., 4100 Seraing (BE)
(72) Inventeur: TIRELLI, Enrico, 4161 Villers-aux-Tours (BE)
(74) Mandataire: AWA Benelux
(86) Numéro de dépôt international: PCT/EP2022/075840
(87) Numéro de publication internationale: WO 2023/126082

(56) Documents cités:
- EP-A1- 2 305 478
- EP-A1- 2 821 234
- JP-A- S61 291 157
- US-A- 3 154 184
- US-B1- 6 718 876

## Description

### Objet de l'invention

La présente invention se rapporte à un dispositif permettant l'automatisation du blocage et du déblocage des paliers de roulement des rouleaux utilisés dans les installations de revêtement de bandes métalliques.

### Etat de la technique

Dans le domaine du revêtement des bandes métalliques, en particulier en sidérurgie, des rouleaux sont utilisés pour l'application de diverses substances liquides sur les bandes en mouvement afin de les recouvrir du revêtement souhaité. Le type de revêtement peut être multiple, comme par exemple une peinture, une laque, un vernis, un traitement chimique de surface, une colle ou tout autre type de substance pouvant avoir un degré de viscosité variable. La diversité de l'usage des produits finis revêtus induit une grande diversité de configurations de ces installations de revêtement. Un nombre important de rouleaux est utilisé dans ce type d'installation, ceux-ci pouvant être de différents types, comme les rouleaux d'application, les rouleaux tendeurs, les rouleaux de renvoi d'angle ou les rouleaux d'appui (ou preneurs) sur les rouleaux applicateurs.

Afin de garantir un résultat final de qualité, les rouleaux (et en particulier les rouleaux d'application et les rouleaux preneurs) doivent avoir une qualité de finition de surface irréprochable de manière à ne pas introduire de défauts d'aspect sur la bande revêtue. Cette exigence de qualité de surface des rouleaux implique un changement fréquent de ceux-ci.

Le changement des rouleaux entraîne ainsi la mise à l'arrêt de l'installation, cet arrêt pouvant être typiquement d'une demi-heure, ce qui peut induire une perte de production pouvant s'avérer conséquente. Le démontage des rouleaux implique l'ouverture des paliers qui contiennent les roulements des axes des rouleaux. Cette opération nécessite une intervention manuelle. Par ailleurs, cette opération nécessite un grand soin de la part des opérateurs, notamment de manière à éviter de salir ou d'endommager des parties mobiles fragiles. De plus, cette opération est donc parfois fastidieuse, impliquant des opérations de dévissage ou déblocage manuel et en outre, elle expose l'opérateur à un danger car il doit s'approcher de la ligne avec des pièces potentiellement en mouvement.

Le document CN209370299U divulgue un siège de palier dans une machine de rembobinage d'une ligne de production de bande d'acier colorée. Le siège comprend un corps supérieur et un corps inférieur venant entourer le palier afin de le bloquer lorsque le rouleau est en utilisation. Lorsque le rouleau doit être changé, le corps supérieur du siège est élevé verticalement grâce à un mécanisme d'entraînement pour libérer le palier par coulissement. Plus précisément, le corps supérieur est fixé sur une glissière et son élévation est actionnée par une vis sans fin. Le corps supérieur ne peut être enlevé complètement du mécanisme, et est simplement abaissé ou soulevé verticalement selon que le rouleau est en utilisation ou que le palier doit être accessible. Le désavantage de cette solution est de ne pas libérer complètement l'espace pour un dégagement aisé des rouleaux.

Dans le document CN212564098U, la partie supérieure de la cage se soulève également, guidée par des plaques télescopiques, de manière à libérer le rouleau. Cependant, cette solution n'est toujours pas satisfaisante car elle demande une manipulation et laisse des éléments mécaniques de précision dans un environnement potentiellement sale. Des problèmes liés à la maintenance de ces assemblages peuvent se présenter en fonction de l'utilisation.

Le document CN209772603U divulgue un support de rouleau comprenant un siège de support inférieur et un siège de support supérieur venant bloquer le palier de roulement du rouleau en utilisation. Le support comprend en outre un dispositif de fixation rapide, comprenant des éléments mécaniques tels qu'un boulon, une vis fixe et une poignée de serrage. Un trou de vis est prévu dans la partie inférieure du siège de support inférieur, tandis qu'une rainure verticale est prévue dans le siège de support supérieur, l'ensemble des éléments coopérant pour fixer de manière amovible le support supérieur au support inférieur.

Le document US 6,718,876 B1 se rapporte à un procédé et un appareil, dans une unité d'impression à rouleaux pour verrouiller les rouleaux dans des logements de paliers, en rapport avec le mouvement des rouleaux de la position ouverte à la position de travail. Le déplacement des rouleaux par rapport au bâti de l'unité d'impression est mis à profit pour, lors de l'opération de déplacement, manœuvrer mécaniquement des dispositifs de blocage au niveau des logements de paliers des rouleaux entre les positions ouverte et fermée.

### Buts de l'invention

La présente invention vise à fournir une solution permettant de faciliter la maintenance et un changement rapide des rouleaux grâce à une libération et une fixation aisées des paliers de roulement.

Un autre but poursuivi par l'invention est de fournir une solution automatisée, le blocage et déblocage des paliers pouvant alors être réalisés à distance par l'opérateur, assurant par là-même une sécurité accrue de l'opération.

Un autre but poursuivi par l'invention est de fournir un dispositif sûr pour les opérateurs et permettant d'augmenter la productivité et de diminuer le coût des opérations de blocage/déblocage des paliers, grâce à la diminution drastique du temps nécessaire à la maintenance des rouleaux.

### Principaux éléments caractéristiques de l'invention

La présente invention se rapporte à une installation de revêtement de bandes métalliques en mouvement comprenant un rouleau et un palier de roulement connecté à une extrémité du rouleau, ainsi qu'un dispositif de blocage et de déblocage automatisé du rouleau, ledit dispositif de blocage et de déblocage automatisé comprenant :
- un bras de support comprenant un siège de roulement apte à supporter un palier de roulement, ledit palier de roulement étant connecté à une extrémité du rouleau ;
- un bras de maintien mobile du palier de roulement, ledit bras de maintien mobile étant monté pivotant sur le bras de support autour d'un axe parallèle au rouleau, de manière à ce que le bras de maintien mobile s'écarte latéralement du palier de roulement lors de son pivotement ;
- un actionneur permettant de faire passer, en utilisation, le bras de maintien mobile d'une position de blocage à une position de déblocage du rouleau, la position de blocage étant la position dans laquelle le rouleau se trouve en utilisation et la position de déblocage étant la position permettant au rouleau d'être enlevé du dispositif ;
ladite installation étant caractérisée en ce que le palier de roulement est en appui sur le siège de roulement du bras de support et n'a, en utilisation normale, aucun contact avec le bras de maintien mobile, ce qui définit un espace minimal d'au moins un centième de millimètre entre le palier de roulement et le bras de maintien mobile, ledit bras de maintien mobile permettant de retenir le palier de roulement si celui-ci sort anormalement du siège de roulement.

La partie caractérisante ci-dessus a pour fonction d'une part la réduction de la friction dans la position de blocage et d'autre part une fonction de sécurité.

Selon des formes d'exécution préférées de l'invention, l'installation de revêtement comprend en outre une des caractéristiques suivantes, ou une combinaison appropriée de celles-ci :
- le bras de maintien mobile est logé à l'intérieur du bras de support ;
- la course angulaire du bras de maintien mobile lors de son pivotement est limitée d'une part par la position angulaire correspondant audit espace minimal et d'autre part par la position angulaire correspondant à la position de déblocage ;
- le bras de maintien mobile comprend une partie supérieure adjacente au palier de roulement en utilisation, se présentant sous forme d'un arc de cercle qui ne couvre pas au moins une section supérieure du palier de roulement, de manière à permettre l'enlèvement du rouleau lors du pivotement latéral du bras de maintien mobile en position de déblocage ;
- le bras de maintien mobile a une géométrie et un poids réparti tels qu'il se trouve naturellement en position de déblocage par gravité, et caractérisé en ce que l'actionneur est apte à appuyer sur le bras de maintien mobile de sorte à le faire basculer, en utilisation, de sa position de déblocage vers sa position de blocage ;
- un ressort de rappel est prévu pour aider la gravité à garantir un déblocage complet ;
- l'actionneur est un vérin de type pneumatique, hydraulique ou électrique, simple ou double effet, de préférence commandé à distance ;
- une cale est prévue sur le bras de maintien mobile, ladite cale étant ajustée pour permettre au bras de maintien mobile de venir en butée contre le bras de support et d'éviter le contact, ou de limiter la force de contact, entre le bras de maintien mobile et le palier de roulement ;
- la cale est fixée sur le bras de maintien mobile à l'aide d'une tige filetée traversant la cale et la fixant dans un alésage prévu dans le bras de maintien mobile.

### Brève description des figures

La figure 1 représente une vue en perspective d'une forme d'exécution d'un dispositif de blocage et déblocage de paliers selon la présente invention, le bras de maintien étant en position de blocage.
La figure 2 représente une vue en perspective de la forme d'exécution de la figure 1, le bras de maintien étant en position de déblocage.
La figure 3 représente une vue de profil de la forme d'exécution de la figure 1, le bras de maintien étant en position de blocage.
La figure 4 représente une vue de profil de la forme d'exécution de la figure 1, le bras de maintien étant en position de déblocage.
La figure 5 représente une vue en coupe longitudinale de la forme d'exécution de la figure 1, le bras de maintien étant en position de blocage.
La figure 6 représente une vue en coupe longitudinale de la forme d'exécution de la figure 1, le bras de maintien étant en position de déblocage.

### Description d'une forme d'exécution préférée de l'invention

La présente invention solutionne le problème technique décrit ci-dessus et fournit un dispositif de fixation des rouleaux qui est pratique, rapide et fiable.

Contrairement aux systèmes de l'état de la technique, le système de fixation de roulement selon l'invention se fait par le bas et non pas par le haut.

Il s'agit d'un dispositif de blocage de taille réduite et d'encombrement soigneusement calculé qui maintient en place le rouleau applicateur tout le temps d'utilisation nécessaire et permet son dégagement aisé par une simple commande automatique externe. Chaque palier de roulement repose dans un logement dont la forme permet de limiter la reprise des efforts par le mécanisme de blocage. L'effort le plus important provient du rouleau preneur qui s'appuie contre le rouleau applicateur. Le dispositif nécessite un actionneur appuyant sur un levier dont l'axe de rotation est décentré. Ce décentrage permet de garantir que le poids du rouleau repose sur le bâti et non sur le système de fermeture. En outre, une plaque de retenue, déjà fonctionnellement connue en soi, limite le mouvement latéral que pourrait avoir le rouleau.

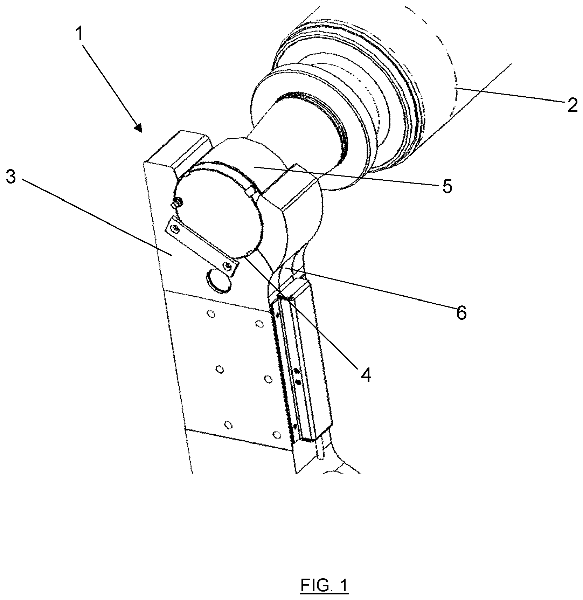

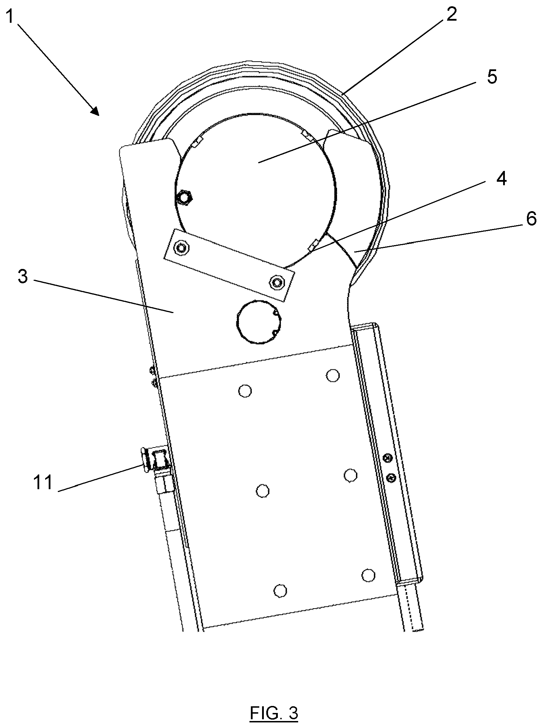

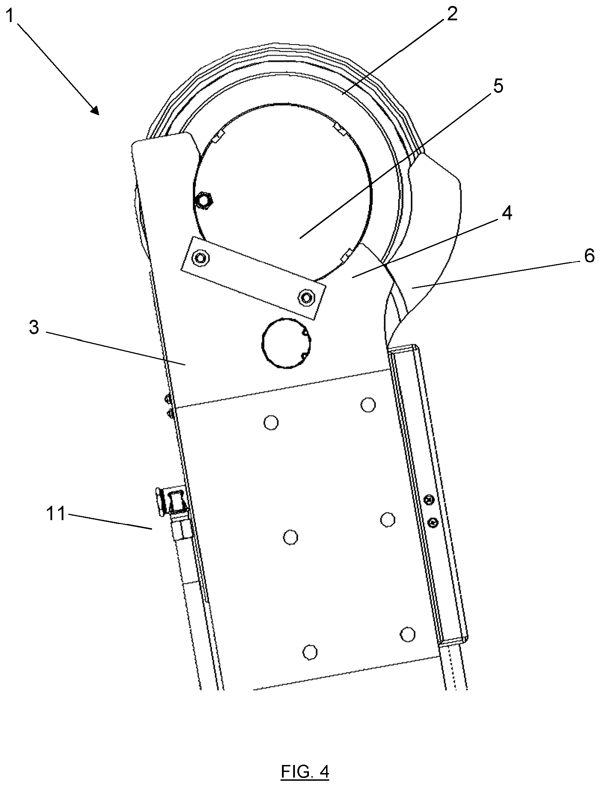

Une forme d'exécution du dispositif 1 de blocage et déblocage de paliers selon la présente invention est représentée sur les figures 1 à 6. Celui-ci consiste en un dispositif automatisé de blocage et de déblocage de rouleaux à destination des installations de revêtement de bandes métalliques en mouvement.

Comme expliqué précédemment, les rouleaux, tels que les rouleaux applicateurs, doivent être remplacés régulièrement afin de garantir une qualité optimale du revêtement.

Les rouleaux sont maintenus à leurs extrémités par des paliers de roulement. Ceux-ci, connus en soi de l'état de l'art, sont maintenus par un siège de roulement qui est un dispositif soutenant le roulement par l'extérieur, en fixant la bague extérieure du roulement (dans les machines de petite taille, le roulement est directement en contact avec le siège, sans palier intermédiaire). De cette manière, la bague intérieure est libre de tourner, et d'entraîner le rouleau, alors que la bague extérieure reste immobile.

Pour qu'un rouleau puisse être changé, l'opérateur doit avoir accès aux paliers de roulement. Le dispositif de la présente invention permet de libérer les paliers de manière automatisée. On entend par là que le processus de blocage et de déblocage des paliers se fait à l'aide de moyens mécaniques sans intervention humaine directe.

Pour ce faire, le dispositif de blocage et de déblocage comprend un bras de support 3 dont la partie supérieure forme un siège de roulement 4. Le siège de roulement 4 a pour fonction de supporter un palier de roulement 5 qui est connecté à l'une des extrémités du rouleau 2 afin de le maintenir durant l'opération de revêtement de surface.

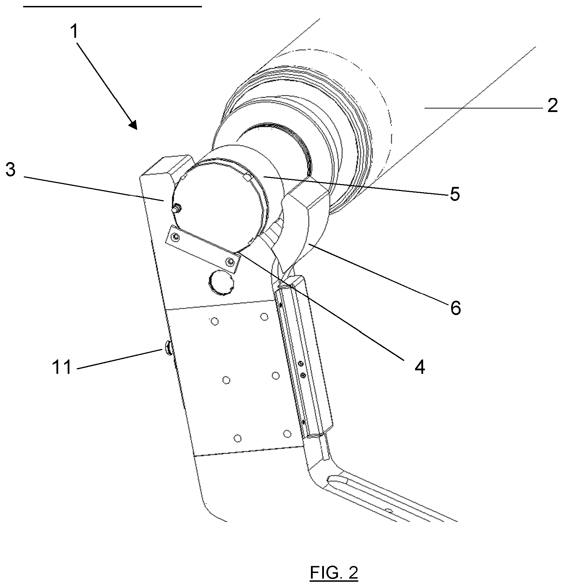

Dans le cadre de la présente invention, un bras de maintien mobile 6 est logé à l'intérieur du bras de support 3 comme représenté sur les figures 1 et 2. Ce bras de maintien 6 a pour objectif de sécuriser la position du palier de roulement 5 dans le siège de roulement 4. Plus précisément, le bras de maintien 6 est monté pivotant dans le bras de support 3, autour d'un axe parallèle au rouleau 2. De cette manière, le bras de maintien 6 peut passer d'une position de blocage du palier de roulement 5, tel qu'illustré sur les Figures 1, 3 et 5, à une position de déblocage du palier de roulement 5, tel qu'illustré sur les Figures 2, 4 et 6.

Dans la position de blocage, le rouleau 2 se trouve également en position d'utilisation. Il est ainsi maintenu à ses extrémités par les paliers de roulement 5 qui sont positionnés dans les sièges de roulement 4 des bras de support 3. Les bras de maintien 6 viennent fermer latéralement les sièges de roulement 4 afin de sécuriser le dispositif de blocage 1 du rouleau 2. Dans cette configuration, les paliers de roulement 5 sont en appui sur les sièges de roulement 4 des bras de support 3. En utilisation normale, c'est-à-dire lorsque le rouleau est positionné dans le siège de roulement 4, le palier de roulement 5 n'a aucun contact avec le bras de maintien mobile 6. En effet, le bras de maintien mobile 6 permet de retenir le palier de roulement 5 si celui-ci a la possibilité de sortir du siège de roulement 4 et a donc une fonction de sécurité/retenue. Selon l'invention, un espace d'au moins un centième de mm est prévu entre le bras de maintien 6 et le palier de roulement 5 lorsque le bras de maintien mobile 6 se trouve en position de blocage. De cette manière, les paliers de roulement 5 ne reposent pas sur les bras de maintien mobile 6 mais sur les bras de support 3.

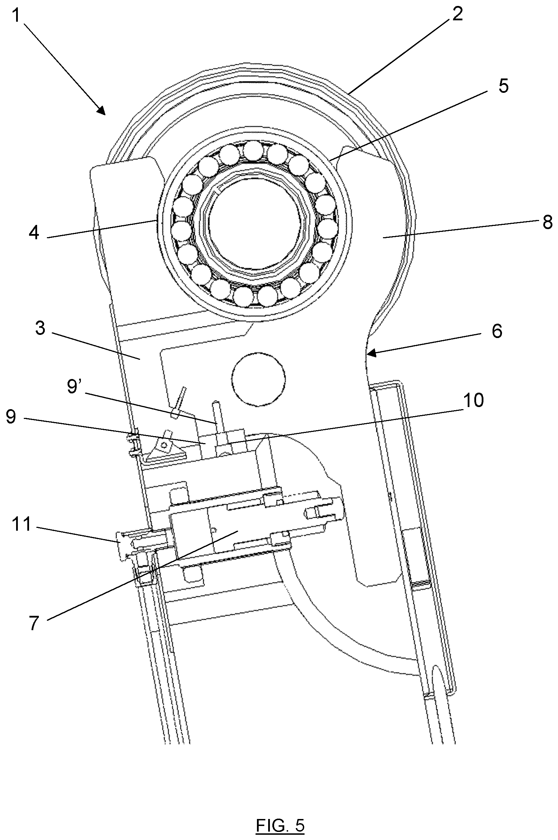

Dans la position de déblocage, le bras de maintien mobile 6 est en position ouverte, à savoir qu'il a pivoté autour de son axe de rotation pour s'éloigner du siège de roulement 4. Dans cette configuration, le palier de roulement 5 est accessible et le rouleau peut être enlevé facilement du dispositif. Aucun élément ne vient à présent bloquer le passage vertical au-dessus du siège de roulement, et la manipulation du rouleau est donc aisée. De préférence, la partie supérieure 8 dudit bras de maintien mobile 6, la partie supérieure 8 étant la partie adjacente au palier de roulement 5, est sous forme d'arc de cercle et est situé au moins en partie sous le palier de roulement 5 et/ou latéralement par rapport à celui-ci, le blocage du rouleau 2 se faisant ainsi latéralement (figure 5). La partie supérieure 8 du bras de maintien mobile 6 ne recouvre donc en aucun cas le palier de roulement 5 par le dessus, mais uniquement par le dessous et latéralement.

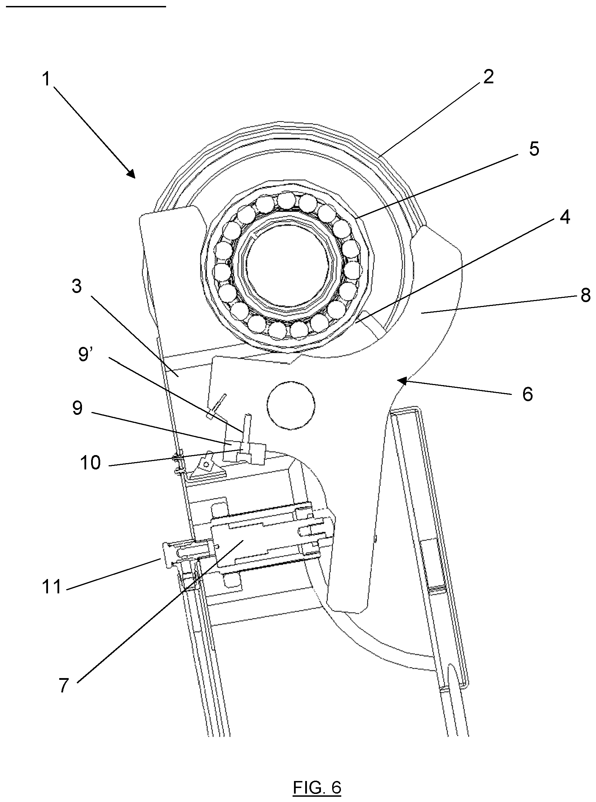

Comme le dispositif selon la présente invention est automatisé, celui-ci comprend un actionneur 7 permettant de faire passer, en utilisation, le bras de maintien 6 de la position de blocage à la position de déblocage. Les figures 5 et 6 illustrent la poussée de l'actionneur 7 sur le bras de maintien 6, qui bascule alors de sa position de déblocage vers sa position de blocage et vice versa. Dans le mode d'exécution illustré, le bras de maintien mobile 6 a une géométrie et un poids réparti tels qu'il se trouve dans sa position naturelle en position de déblocage grâce à la gravité, et, en utilisation, l'actionneur 7 appuie sur le bras de maintien mobile 6 pour le faire basculer de sa position de déblocage vers sa position de blocage. Un ressort de rappel (non représenté) peut être prévu pour aider la gravité à garantir un déblocage complet. L'actionneur 7 peut être un vérin simple ou double effet, de type pneumatique, hydraulique ou électrique. Un bouton d'actionnement 11 de l'actionneur 7 peut être prévu sur le bras de support 3, et peut être déclenché à distance par un opérateur.

Une cale 9 est prévue sur le bras de maintien mobile 6, permettant au bras de maintien mobile 6 de venir en butée contre le bras de support 3, en évitant ainsi d'avoir un contact entre le bras de maintien mobile 6 et le palier de roulement 5. La cale 9 est fixée sur le bras de maintien mobile 6 à l'aide d'une tige filetée 9' traversant la cale 9 pour la fixer dans un alésage 10 prévu dans le bras de maintien mobile 6. De préférence, l'alésage 10 est réalisé in situ dans le bras de maintien mobile 6 pour garantir une position exacte de ce dernier, l'espacement entre le bras de maintien mobile et le palier de roulement 5 devant être ajusté de manière précise.

Pour automatiser le système de blocage et de déblocage des paliers, un des enjeux de la présente invention a été de pouvoir placer l'ensemble des éléments fonctionnels à l'intérieur du bras de support 3. Le but étant aussi d'éviter de bloquer le palier 5 par le dessus, afin de garantir un accès aisé à ce palier 5, la conception de la géométrie du bras de maintien 6 et de l'ensemble des éléments mécaniques, situés à l'intérieur du bras de support 3, afin de venir bloquer le palier par le dessous, constituait un réel problème technique qui a été résolu par l'invention.

### Liste des symboles de référence

- 1: Dispositif de maintien et de dégagement
- 2: Rouleau
- 3: Bras de support
- 4: Siège de roulement
- 5: Palier de roulement
- 6: Bras de maintien
- 7: Actionneur
- 8: Partie supérieure du bras de maintien
- 9: Cale
- 9': Tige filetée
- 10: Alésage pour cale
- 11: Bouton d'actionnement

## Revendications

1. Installation de revêtement de bandes métalliques en mouvement comprenant un rouleau (2) et un palier de roulement (5) connecté à une extrémité du rouleau (2), ainsi qu'un dispositif de blocage et de déblocage automatisé (1) du rouleau (2), ledit dispositif de blocage et de déblocage automatisé (1) comprenant :
- un bras de support (3) comprenant un siège de roulement (4) apte à supporter un palier de roulement (5), ledit palier de roulement (5) étant connecté à une extrémité du rouleau (2);
- un bras de maintien mobile (6) du palier de roulement (5), ledit bras de maintien mobile (6) étant monté pivotant sur le bras de support (3) autour d'un axe parallèle au rouleau (2), de manière à ce que le bras de maintien mobile (6) s'écarte latéralement du palier de roulement (5) lors de son pivotement ;
- un actionneur (7) permettant de faire passer, en utilisation, le bras de maintien mobile (6) d'une position de blocage à une position de déblocage du rouleau (2), la position de blocage étant la position dans laquelle le rouleau (2) se trouve en utilisation et la position de déblocage étant la position permettant au rouleau (2) d'être enlevé du dispositif (1) ;
ladite installation (1) étant **caractérisée en ce que** le palier de roulement (5) est en appui sur le siège de roulement (4) du bras de support (3) et n'a, en utilisation normale, aucun contact avec le bras de maintien mobile (6), ce qui définit un espace minimal d'au moins un centième de millimètre entre le palier de roulement (5) et le bras de maintien mobile (6), ledit bras de maintien mobile (6) permettant de retenir le palier de roulement (5) si celui-ci sort anormalement du siège de roulement (4).

2. Installation de revêtement (1) selon la revendication 1, **caractérisée en ce que** le bras de maintien mobile (6) est logé à l'intérieur du bras de support (3).

3. Installation de revêtement (1) selon la revendication 1, **caractérisée en ce que** la course angulaire du bras de maintien mobile (6) lors de son pivotement est limitée d'une part par la position angulaire définie par ledit espace minimal et d'autre part par la position angulaire correspondant à la position de déblocage.

4. Installation de revêtement (1) selon l'une des revendications précédentes, **caractérisée en ce que** le bras de maintien mobile (6) comprend une partie supérieure (8) adjacente au palier de roulement (5) en utilisation, se présentant sous forme d'un arc de cercle qui ne couvre pas au moins une section supérieure du palier de roulement (5), de manière à permettre l'enlèvement du rouleau (2) lors du pivotement latéral du bras de maintien mobile (6) en position de déblocage.

5. Installation de revêtement (1) selon l'une des revendications précédentes, **caractérisée en ce que** le bras de maintien mobile (6) a une géométrie et un poids réparti tels qu'il se trouve naturellement en position de déblocage par gravité, et **caractérisé en ce que** l'actionneur (7) est apte à appuyer sur le bras de maintien mobile (6) de sorte à le faire basculer, en utilisation, de sa position de déblocage vers sa position de blocage.

6. Installation de revêtement (1) selon la revendication 5, **caractérisée en ce qu'**un ressort de rappel est prévu pour aider la gravité à garantir un déblocage complet.

7. Installation de revêtement (1) selon l'une des revendications précédentes, **caractérisée en ce que** l'actionneur (7) est un vérin de type pneumatique, hydraulique ou électrique, simple ou double effet, de préférence commandé à distance.

8. Installation de revêtement (1) selon l'une des revendications précédentes, **caractérisée en ce qu'**une cale (9) est prévue sur le bras de maintien mobile (6), ladite cale (9) étant ajustée pour permettre au bras de maintien mobile (6) de venir en butée contre le bras de support (3) et d'éviter le contact, ou de limiter la force de contact, entre le bras de maintien mobile (6) et le palier de roulement (5).

9. Installation de revêtement (1) selon la revendication 8, **caractérisée en ce que** la cale (9) est fixée sur le bras de maintien mobile (6) à l'aide d'une tige filetée traversant la cale (6) et la fixant dans un alésage (10) prévu dans le bras de maintien mobile (6).

## Patentansprüche

1. Anlage zum Beschichten von Metallbändern in Bewegung, umfassend eine Walze (2) und ein Wälzlager (5), das mit einem Ende der Walze (2) verbunden ist, sowie eine automatisierte Arretier- und Freigabevorrichtung (1) der Walze (2), die automatisierte Arretier- und Freigabevorrichtung (1) umfassend:
- einen Tragarm (3), umfassend einen Rollensitz (4), der geeignet ist, um ein Wälzlager (5) zu tragen, wobei das Wälzlager (5) mit einem Ende der Walze (2) verbunden ist;
- einen beweglichen Haltearm (6) des Wälzlagers (5), wobei der bewegliche Haltearm (6) um eine Achse parallel zu der Walze (2) schwenkbar an dem Tragarm (3) montiert ist, sodass sich der bewegliche Haltearm (6) bei seinem Schwenken seitlich von dem Wälzlager (5) wegbewegt;
- einen Aktuator (7), der es ermöglicht, den beweglichen Haltearm (6) im Gebrauch von einer Arretierposition in eine Freigabeposition der Walze (2) zu bewegen, wobei die Arretierposition die Position ist, in der sich die Walze (2) im Gebrauch befindet, und die Freigabeposition die Position ist, die es der Walze (2) ermöglicht, von der Vorrichtung (1) abgehoben zu werden;
wobei die Anlage (1) **dadurch gekennzeichnet ist, dass** das Wälzlager (5) auf dem Lagersitz (4) des Tragarms (3) aufliegt und im normalen Gebrauch keinen Kontakt mit dem beweglichen Haltearm (6) aufweist, was einen Mindestabstand von mindestens einem hundertstel Millimeter zwischen dem Wälzlager (5) und dem beweglichen Haltearm (6) definiert, wobei der bewegliche Haltearm (6) es ermöglicht, das Wälzlager (5) zurückzuhalten, wenn es sich abnormal aus dem Lagersitz (4) bewegt.

2. Beschichtungsanlage (1) nach Anspruch 1, **dadurch gekennzeichnet, dass** der bewegliche Haltearm (6) im Inneren des Tragarms (3) untergebracht ist.

3. Beschichtungsanlage (1) nach Anspruch 1, **dadurch gekennzeichnet, dass** der Winkelhub des beweglichen Haltearms (6) bei seinem Schwenken einerseits durch die Winkelposition, die durch den Mindestabstand definiert ist, und andererseits durch die Winkelposition, die der Freigabeposition entspricht, begrenzt ist.

4. Beschichtungsanlage (1) nach einem der vorherigen Ansprüche, **dadurch gekennzeichnet, dass** der bewegliche Haltearm (6) einen im Gebrauch an das Wälzlager (5) angrenzenden oberen Abschnitt (8) umfasst, der in Form eines Kreisbogens vorliegt, der mindestens einen oberen Abschnitt des Wälzlagers (5) nicht abdeckt, um das Anheben der Walze (2) beim seitlichen Schwenken des beweglichen Haltearms (6) in die Freigabeposition zu ermöglichen.

5. Beschichtungsanlage (1) nach einem der vorherigen Ansprüche, **dadurch gekennzeichnet, dass** der bewegliche Haltearm (6) eine Geometrie und ein verteiltes Gewicht aufweist, wie er sich aufgrund der Schwerkraft natürlich in der Freigabeposition befindet, und **dadurch gekennzeichnet, dass** der Aktuator (7) geeignet ist, um auf den beweglichen Haltearm (6) zu drücken, um ihn im Gebrauch aus seiner Freigabeposition in seine Arretierposition zu schwenken.

6. Beschichtungsanlage (1) nach Anspruch 5, **dadurch gekennzeichnet, dass** eine Rückholfeder bereitgestellt ist, um die Schwerkraft dabei unterstützt, eine vollständige Freigabe zu gewährleisten.

7. Beschichtungsanlage (1) nach einem der vorherigen Ansprüche, **dadurch gekennzeichnet, dass** der Aktuator (7) ein Zylinder vom pneumatischen, hydraulischen oder elektrischen, einfach- oder doppeltwirkenden und vorzugsweise ferngesteuerten Typ ist.

8. Beschichtungsanlage (1) nach einem der vorherigen Ansprüche, **dadurch gekennzeichnet, dass** ein Keil (9) an dem beweglichen Haltearm (6) bereitgestellt ist, wobei der Keil (9) eingestellt ist, um zu ermöglichen, dass der bewegliche Haltearm (6) an dem Tragarm (3) anliegt und um einen Kontakt oder eine Begrenzung der Kontaktkraft zwischen dem beweglichen Haltearm (6) und dem Wälzlager (5) zu verhindern.

9. Beschichtungsanlage (1) nach Anspruch 8, **dadurch gekennzeichnet, dass** der Keil (9) mittels einer Gewindestange, die den Keil (6) durchquert und ihn in einer Bohrung (10) fixiert, die in dem beweglichen Haltearm (6) bereitgestellt ist, an dem beweglichen Haltearm (6) befestigt ist.

## Claims

1. An installation for coating moving metal strips, comprising a roller (2) and a roller bearing (5) connected to one end of the roller (2), as well as an automatic locking and unlocking device (1) of the roller (2), said automatic locking and unlocking device (1) comprising:
- a support arm (3) comprising a bearing seat (4) configured to support a roller bearing (5), said roller bearing (5) being connected to one end of the roller (2);
- a movable retaining arm (6) of the roller bearing (5), said movable retaining arm (6) being pivotally mounted on the support arm (3) about an axis parallel to the roller (2) in such a way that the movable retaining arm (6) moves laterally away from the roller bearing (5) during pivoting thereof;
- an actuator (7) configured to move the movable retaining arm (6), during use, from a locking position to an unlocking position of the roller (2), the locking position being the position in which the roller (2) is in use, and the unlocking position being the position allowing the roller (2) to be removed from the device (1);
said installation (1) being **characterized in that** the roller bearing (5) rests on the bearing seat (4) of the support arm (3) and, in normal use, has no contact with the movable retaining arm (6), which defines a minimum gap of at least one hundredth of a millimeter between the roller bearing (5) and the movable retaining arm (6), said movable retaining arm (6) allowing retention of the roller bearing (5) if the latter abnormally leaves the bearing seat (4).

2. The coating installation (1) according to claim 1, **characterized in that** the movable retaining arm (6) is housed inside the support arm (3).

3. The coating installation (1) according to claim 1, **characterized in that** the angular travel of the movable retaining arm (6) during pivoting thereof is limited on the one hand by the angular position defined by said minimum gap and on the other hand by the angular position corresponding to the unlocking position.

4. The coating installation (1) according to one of the preceding claims, **characterized in that** the movable retaining arm (6) comprises an upper part (8) adjacent to the roller bearing (5) during use, assuming the form of an arc of circle which does not cover at least an upper section of the roller bearing (5), so as to allow the roller (2) to be removed when the movable retaining arm (6) is pivoted laterally into the unlocking position.

5. The coating installation (1) according to one of the preceding claims, **characterized in that** the movable retaining arm (6) has a geometry and a weight distributed such that it is naturally in the unlocking position by gravity, and **characterized in that** the actuator (7) is able to press on the movable retaining arm (6) so as to switch it, during use, from its unlocking position to its locking position.

6. The coating installation (1) according to claim 5, **characterized in that** a return spring is provided to ensure full unlocking by gravity.

7. The coating installation (1) according to one of the preceding claims, **characterized in that** the actuator (7) is a single-acting or double-acting, pneumatic, hydraulic or electric cylinder, preferably remotely controlled.

8. The coating installation (1) according to one of the preceding claims, **characterized in that** a shim (9) is provided on the movable retaining arm (6), said shim (9) being adjusted to allow the movable retaining arm (6) to abut against the support arm (3) and to prevent contact, or to limit the contact force, between the movable retaining arm (6) and the roller bearing (5).

9. The coating installation (1) according to claim 8, **characterized in that** the shim (9) is attached to the movable retaining arm (6) by a threaded rod passing through the shim (6) and attaching it in a bore (10) provided in the movable retaining arm (6).
